# EUROPEAN PATENT SPECIFICATION

(11) **EP 4 344 259 B1**
(45) Date of publication and mention of the grant of the patent: **25.03.2026**
(21) Application number: 22803750.3
(22) Date of filing: 24.04.2022
(51) Int. Cl.: H04W 4/08, H04W 8/20, H04L 69/40

(54) **SESSION BINDING RELATIONSHIP PROCESSING METHOD AND APPARATUS, ELECTRONIC DEVICE, AND READABLE MEDIUM**
VERFAHREN UND VORRICHTUNG ZUR VERARBEITUNG VON SITZUNGSBINDUNGSBEZIEHUNGEN, ELEKTRONISCHE VORRICHTUNG UND LESBARES MEDIUM
PROCÉDÉ ET APPAREIL DE TRAITEMENT DE RELATION DE LIAISON DE SESSIONS, DISPOSITIF ÉLECTRONIQUE ET SUPPORT LISIBLE

(30) Priority: 20.05.2021 CN 202110549101
(43) Date of publication of application: 27.03.2024
(73) Proprietor: ZTE Corporation, Shenzhen, Guangdong 518057 (CN)
(72) Inventor: ZHAO, Li, Shenzhen, Guangdong 518057 (CN); YAN, Xiaofei, Shenzhen, Guangdong 518057 (CN)
(74) Representative: Ipsilon
(86) International application number: PCT/CN2022/088756
(87) International publication number: WO 2022/242426

(56) References cited:
- CN-A- 110 519 824
- CN-A- 110 650 475
- CN-A- 110 944 361
- CN-A- 113 038 394
- US-A1- 2021 037 375
- HUAWEI ET AL: "PCF discovery by AF via BSF", vol. SA WG2, no. Sapporo, Japan; 20190624 - 20190628, 18 June 2019 (2019-06-18), XP051752190, Retrieved from the Internet <URL:http://www.3gpp.org/ftp/tsg%5Fsa/WG2%5FArch/TSGS2%5F134%5FSapporo/Docs/S2%2D1907219%2Ezip> [retrieved on 20190618]
- HUAWEI: "PCF Discovery by AF via BSF", 3GPP TSG-SA2 MEETING #134 S2-1907219, 24 June 2019 (2019-06-24), XP051752190

## Description

### TECHNICAL FIELD

The present disclosure relates to the technical field of communications, and in particular, to a session binding relationship processing method and apparatus, an electronic device, and a readable medium.

### BACKGROUND

In a Protocol Data Unit (PDU) session process, after a user of 5^{th}-Generation mobile communication technology (5G) is online, a Policy Control Function entity (PCF) needs to register a user binding relationship with a Binding Support Function entity (BSF) through a registration interface. When a disaster tolerance of a PCF occurs, another PCF performing takeover in the disaster tolerance needs to actively update the user binding relationship with the BSF. Since an update message under current protocols can be merely used for updating a binding record of a single user, the PCF performing takeover in the disaster tolerance has to use, based on the current protocols, an unregistration message and a registration message for each of all users to change the user binding relationships.

According to the current protocols, after the PCF fails, a large number of messages may be generated between the PCF performing takeover in the disaster tolerance and the BSF for achieving re-registration of the user binding relationship, so that a sudden network signaling storm is caused and leads to a traffic impact on a signaling network, which makes traffic of an Application Function entity (AF) fail to be connected to a correct PCF and results in an increase of AF traffic call loss time. Document HUAWEI ET AL: "PCF discovery by AF via BSF",3GPP DRAFT; S2-1907219 WAS 06572_5506_503 PCF SELECTION BY AF_1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN,vol. SA WG2, no. Sapporo, Japan; 18 June 2019 discusses aspects related to PCF discovery.

### SUMMARY

An embodiment of the present disclosure provides a session binding relationship processing method, including: in response to a case where a preset first condition for user group migration is met, determining a first user group, wherein the first user group includes at least two session users; and sending a management create request message carrying information of the first user group and information of a current Policy Control Function entity (PCF) to a Binding Support Function entity (BSF), so as to allow the BSF to establish a first binding relationship between the information of the user group and the information of the PCF according to the information of the first user group and the information of the current PCF.

An embodiment of the present disclosure further provides a session binding relationship processing method, including: in response to receiving a session management policy update request message sent by a Session Management Function entity (SMF), acquiring a user address carried in the session management policy update request message; returning a session management policy update response message to the SMF; and determining a second user group corresponding to the user address, and sending a management registration request message carrying information of a current PCF, the user address and information of the second user group to a BSF, so as to allow the BSF to establish a second binding relationship between the user address and the information of the PCF according to the user address and the information of the current PCF and establish a corresponding relationship between the user address and the user group according to the user address and the information of the second user group.

An embodiment of the present disclosure further provides a session binding relationship processing method, including: in response to receiving a management create request message sent by a PCF, acquiring information of a first user group and information of the PCF which are carried in the management create request message, wherein the first user group includes at least two session users; establishing a first binding relationship between the information of the user group and the information of the PCF according to the information of the first user group and the information of the PCF; and sending a management create response message to the PCF.

An embodiment of the present disclosure further provides a PCF, including a first processing module and a first sending module. The first processing module is configured to determine a first user group in response to a case where a preset first condition for user group migration is met, wherein the first user group includes at least two session users; and the first sending module is configured to send a management create request message carrying information of the first user group and information of the current PCF to a BSF, so as to allow the BSF to establish a first binding relationship between the information of the user group and the information of the PCF according to the information of the first user group and the information of the current PCF.

An embodiment of the present disclosure further provides a PCF, including a first receiving module, a second processing module, a second sending module, and a second receiving module. The second receiving module is configured to receive a session management policy update request message sent by a SMF; the second processing module is configured to acquire a user address carried in the session management policy update request message, and determine a second user group corresponding to the user address; and the second sending module is configured to return a session management policy update response message to the SMF, and send a management registration request message carrying information of the current PCF, the user address, and information of the second user group to a BSF, so as to allow the BSF to establish a second binding relationship between the user address and the information of the PCF according to the user address and the information of the current PCF and establish a corresponding relationship between the user address and the user group according to the user address and the information of the second user group.

An embodiment of the present disclosure further provides a BSF, including a first receiving module, a first processing module, and a first sending module. The first receiving module is configured to receive a management create request message sent by a PCF; the first processing module is configured to acquire information of a first user group and information of the PCF which are carried in the management create request message, and establish a first binding relationship between the information of the user group and the information of the PCF according to the information of the first user group and the information of the PCF, wherein the first user group includes at least two session users; and the first sending module is configured to send a management create response message to the PCF.

An embodiment of the present disclosure further provides an electronic device, including: one or more processors; and a storage device having one or more programs stored thereon. When the one or more programs are executed by the one or more processors, the one or more processors are caused to implement the session binding relationship processing methods according to the present disclosure.

An embodiment of the present disclosure further provides a computer-readable medium having a computer program stored thereon, wherein when the program is executed by a processor, the processor is caused to implement the session binding relationship processing methods according to the present disclosure.

### BRIEF DESCRIPTION OF DRAWINGS

FIG. 1 is a schematic diagram of a network architecture according to the present disclosure;
FIG. 2 is a flowchart illustrating a session binding relationship processing method for establishing a session binding relationship according to the present disclosure;
FIG. 3 is a flowchart illustrating a session binding relationship processing method for deleting a session binding relationship according to the present disclosure;
FIG. 4 is a flowchart illustrating registration of a PCF with a BSF according to the present disclosure;
FIG. 5 is another flowchart illustrating a session binding relationship processing method for establishing a session binding relationship according to the present disclosure;
FIG. 6 is another flowchart illustrating a session binding relationship processing method for deleting a session binding relationship according to the present disclosure;
FIG. 7 is another flowchart illustrating registration of a PCF with a BSF according to the present disclosure;
FIG. 8 is a schematic diagram of a session procedure according to the present disclosure;
FIG. 9 is a schematic diagram illustrating a session binding relationship processing process in a failure scenario of a PCF in a disaster-tolerant group according to the present disclosure;
FIG. 10 is a schematic diagram illustrating a session binding relationship processing process in a load balancing scenario of a PCF according to the present disclosure;
FIG. 11 to FIG. 13 are schematic structural diagrams of PCFs according to the present disclosure; and
FIG. 14 and FIG. 15 are schematic structural diagrams of a BSF according to the present disclosure.

### DETAIL DESCRIPTION OF EMBODIMENTS

Exemplary embodiments will be described more fully below with reference to the drawings, but the exemplary embodiments may be embodied in different forms, and should not be interpreted as being limited to the embodiments described herein. The embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be composed of" used herein indicate(s) the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

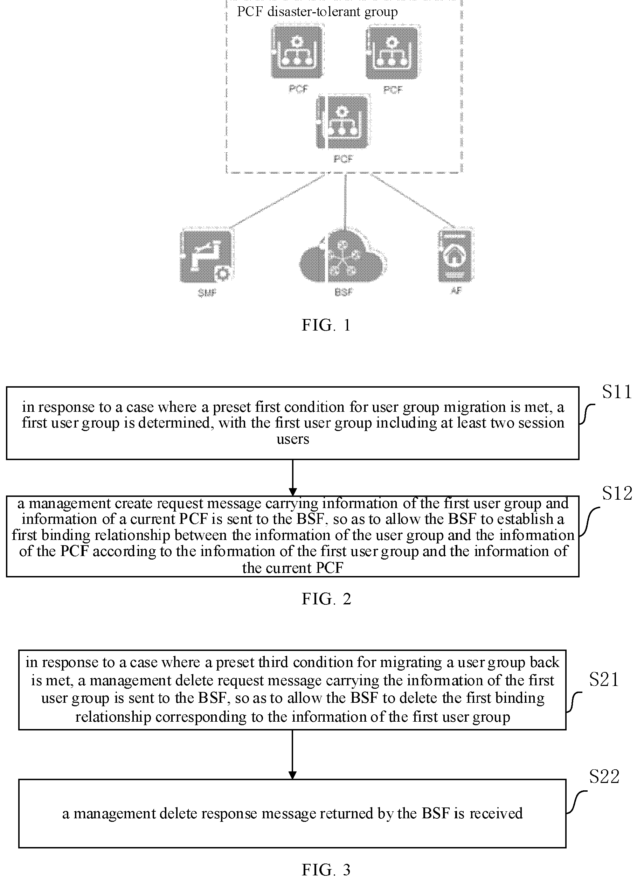

The present disclosure provides a session binding relationship processing method, which is applied to a system architecture shown in FIG. 1. As shown in FIG. 1, a system includes a PCF disaster-tolerant group, an SMF, a BSF, and an AF. The PCF disaster-tolerant group at least includes two PCFs, the BSF is provided outside the SMF, and the BSF and the SMF can communicate with each other.

FIG. 2 is a flowchart illustrating a session binding relationship processing method for establishing a session binding relationship according to the present disclosure. As shown in FIG. 2, the session binding relationship processing method includes the following operations S11 and S12.

At operation S11, in response to a case where a preset first condition for user group migration is met, a first user group is determined, with the first user group including at least two session users.

The user group migration refers to that a user group managed by a PCF is taken over by another PCF in the disaster-tolerant group, and is managed by the PCF performing takeover. In the context of the present disclosure, the first user group is a user group to be migrated. The first user group may be all user groups managed by the PCF before migration, or may be a part of the user groups managed by the PCF before migration, and the first user group may include one group or a plurality of groups.

At this operation, the PCF performing takeover determines the first user group to be migrated in the case where the first condition is met.

At operation S12, a management create request message carrying information of the first user group and information of a current PCF is sent to the BSF, so as to allow the BSF to establish a first binding relationship between the information of the user group and the information of the PCF according to the information of the first user group and the information of the current PCF (i.e., the above-mentioned "PCF performing takeover").

At this operation, the PCF performing takeover sends the management create request message (Nbsf_Management_Create Request) to the BSF, and the management create request message carries the information of the first user group and the information of the current PCF (i.e., the PCF performing takeover). The BSF acquires the information of the first user group and the information of the PCF from the management create request message, and establishes the first binding relationship between the information of the user group and the information of the current PCF (i.e., the PCF performing takeover) according to the information of the first user group and the information of the current PCF. After the first binding relationship is established, migration of the first user group as a whole to the PCF performing takeover may be realized; and in a subsequent session process, search for a PCF may be carried out based on a user group to which a session user belongs and the first binding relationship, so as to realize PCF positioning.

According to the session binding relationship processing method provided by the present disclosure, in the case where the user group is migrated between the PCFs, the information of the first user group to be migrated is sent to the BSF using the management create request message, and the BSF can establish the user-group-based session binding relationship, so that signaling interaction between the PCF and the BSF is greatly reduced, and an traffic impact of the migration of the user group between the PCFs on a signaling network is reduced, thereby shortening AF traffic call loss time.

It should be noted that, after sending the management create request message carrying the information of the first user group and the information of the current PCF to the BSF so as to allow the BSF to establish the first binding relationship between the information of the user group and the information of the PCF according to the information of the first user group and the information of the current PCF (i.e., the operation S12), the session binding relationship processing method may further include: receiving a management create response message returned by the BSF. The PCF performing takeover may receive the management create response message (Nbsf_Management_Create Response) returned by the BSF. After establishing the first binding relationship between the information of the user group and the information of the current PCF (i.e., the PCF performing takeover) according to the information of the first user group and the information of the current PCF, the BSF sends the management create response message to the PCF performing takeover.

A reason for the user group migration may be that the PCF fails or that a load of the PCF is too high. The preset first condition may include: detection of a failure of another PCF in a disaster-tolerant group to which the current PCF belongs; or reception of a session establishment redirect message sent by another PCF in the disaster-tolerant group to which the current PCF belongs, and the session establishment redirect message is sent by the another PCF in a case where the load does not meet a preset second condition. The load not meeting the preset second condition refers to the load being too high, for example, a transmission rate is less than a preset value, or a network delay is greater than a preset value. That is, the user group migration may be triggered under two conditions: (1) a PCF in the disaster-tolerant group fails, and the failed PCF manages the current user group; and (2) a load of a PCF in the disaster-tolerant group is too high, and the PCF with the over-high load manages the current user group. If a PCF detects that its own load is too high, the PCF sends, after receiving a session establishment message sent by the SMF, a session establishment redirect message to another PCF (i.e., a PCF performing takeover) in the disaster-tolerant group to which the PCF belongs. Once a PCF receives a session establishment redirect message sent by another PCF in the disaster-tolerant group to which the PCF belongs, it is indicated that a current load of the PCF sending the session establishment redirect message is too high and thus the user group migration is triggered.

It should be noted that the number of PCFs performing takeover may be one or more than one, and the PCF performing takeover may be set according to actual needs. In a scenario where the user group migration is triggered by the over-high load of the PCF, the first user group to be migrated may be set according to actual needs.

In a case where the preset first condition includes the detection of the failure of another PCF in the disaster-tolerant group to which the current PCF belongs, determining the first user group (i.e., the operation S11) may include: determining a user group managed by the failed PCF as the first user group. In a case where the preset first condition includes the reception of the session establishment redirect message sent by another PCF in the disaster-tolerant group to which the current PCF belongs, determining the first user group (i.e., the operation S11) may include: determining at least a part of user groups managed by the PCF sending the session establishment redirect message as the first user group. That is, in a failure scenario of the PCF in the disaster-tolerant group, all user groups managed by the failed PCF are taken as the first user group to be migrated, and are migrated to another PCF in the disaster-tolerant group; and in a load balancing scenario of the PCF in the disaster-tolerant group, a part of the user groups managed by the PCF with the over-high load are taken as the first user group to be migrated, and are migrated to another PCF in the disaster-tolerant group.

Further, after sending the management create request message carrying the information of the first user group and the information of the current PCF to the BSF (i.e., the operation S12), as shown in FIG. 3, the session binding relationship processing method may further include the following operations S21 and S22.

At operation S21, in response to a case where a preset third condition for migrating a user group back is met, a management delete request message carrying the information of the first user group is sent to the BSF, so as to allow the BSF to delete the first binding relationship corresponding to the information of the first user group.

Migrating the user group back refers to that, after the user group managed by the PCF is taken over by another PCF in the disaster-tolerant group, the migrated user group is migrated back to the original PCF from the PCF performing takeover, and the user group which is migrated back and the user group which is determined to be migrated at the operation S11 are the same, and both refer to the first user group.

At this operation, in a case where the third condition is met, the PCF performing takeover sends the management delete request message (Nbsf_Management_Delete Request) to the BSF, and the management delete request message carries the information of the first user group. The BSF acquires the information of the first user group from the management delete request message, and deletes the first binding relationship corresponding to the information of the first user group. After the first binding relationship is deleted, the first user group may be migrated back as a whole; and in a subsequent session process, instead of being carried out based on a user group to which a session user belongs and the first binding relationship, a PCF is searched for based on a second binding relationship between a user address of the session user and the information of the PCF, so as to realize PCF positioning.

At operation S22, a management delete response message returned by the BSF is received.

At this operation, the PCF performing takeover receives the management delete response message (Nbsf_Management_Delete Response) returned by the BSF. After deleting the first binding relationship corresponding to the information of the first user group, the BSF sends the management delete response message to the PCF performing takeover.

A reason for migrating the user group back may be that the failed PCF returns to normal or that the load of the PCF having the over-high load returns to normal. The preset third condition may include that it is detected that the failed PCF returns to normal or that it is determined that the load of the PCF sending the session establishment redirect message meets the preset second condition. The load meeting the preset second condition refers to that the load returns to normal, for example, the transmission rate reaches the preset value, or the network delay is less than or equal to the preset value. That is, migrating the user group back may be triggered under two conditions: (1) the failed PCF in the disaster-tolerant group returns to normal, and the failed PCF is the PCF from which the user group is migrated; and (2) the load of the PCF having the over-high load in the disaster-tolerant group returns to normal, and the PCF having the over-high load is the PCF from which the user group is migrated. When the PCF performing takeover determines that the load of the PCF having the over-high load returns to normal, it is triggered that the first user group is migrated from the PCF performing takeover to the PCF whose load returns to normal. It should be noted that, for the load balancing scenario of the PCF in the disaster-tolerant group, a user may monitor the load of the PCF. Correspondingly, an operation of determining that the load of the PCF sending the session establishment redirect message meets the preset second condition may include that the PCF performing takeover receives a user group migrate-back instruction sent by the user.

The information of the first user group may include an identification of the first user group. The information of the PCF may include one of or any combination of: an identification of the PCF, a Fully Qualified Domain Name (Fqdn) of the PCF, a Diameter protocol host name (DiamHost) of the PCF, and a Diameter protocol realm name (DiamRealm) of the PCF.

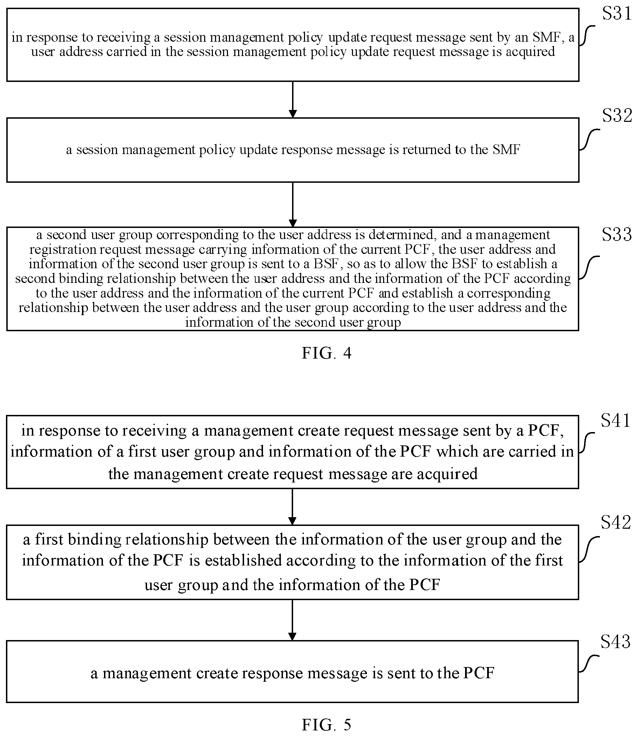

The present disclosure further provides a session binding relationship processing method. FIG. 4 is a flowchart illustrating registration of a PCF with a BSF, that is, a process of registering the PCF with the BSF. As shown in FIG. 4, the session binding relationship processing method includes the following operations S31 to S33.

At operation S31, in response to receiving a session management policy update request message sent by an SMF, a user address carried in the session management policy update request message is acquired.

In a session establishment procedure, after the SMF allocates an Internet Protocol (IP) address to a session user, the SMF sends the session management policy update request message (Npcf_SMPolicyControl_Update Request) to a PCF, and the session management policy update request message carries the user address (i.e., the IP address allocated to the session user by the SMF). It should be noted that the PCF here refers to a PCF configured to bear session traffic.

At operation S32, a session management policy update response message is returned to the SMF.

At this operation, after the PCF acquires the user address from the session management policy update request message, the PCF performs policy decision based on a policy rule configured by an operator and input information from each network element, generates a Session Management (SM) policy, and returns the session management policy update response message (Npcf_SMPolicyControl_Update Response) to the SMF.

At operation S33, a second user group corresponding to the user address is determined, and a management registration request message carrying information of the current PCF, the user address and information of the second user group is sent to a BSF, so as to allow the BSF to establish a second binding relationship between the user address and the information of the PCF according to the user address and the information of the current PCF and establish a corresponding relationship between the user address and the user group according to the user address and the information of the second user group.

At this operation, the PCF determines the user group to which the user address belongs (that is, determining the second user group) according to a user grouping policy. Illustratively, the user grouping policy may be a policy of grouping users segmentally based on user addresses. The PCF sends the management registration request message (Nbsf_Management_Register Request) to the BSF, the management registration request message at least carries the information of the current PCF, the user address, and the information of the second user group, and the management registration request message may further carry a user identification. The BSF acquires the information of the PCF, the user address, and the information of the second user group from the management registration request message, establishes the second binding relationship between the user address and the information of the PCF according to the user address and the information of the current PCF, and also establishes the corresponding relationship between the user address and the user group according to the user address and the information of the second user group, that is, the BSF not only establishes the user-based second binding relationship, but also records a user group to which a user belongs.

After determining the second user group corresponding to the user address and sending the management registration request message carrying the information of the current PCF, the user address, and the information of the second user group to the BSF (i.e., the operation S33), the method may further include: receiving a management registration response message returned by the BSF. The PCF receives the management registration response message (Nbsf_Management_Register Response) returned by the BSF. After establishing the second binding relationship between the user address and the information of the PCF and the corresponding relationship between the user address and the user group, the BSF returns the management registration response message to the PCF.

The present disclosure further provides a session binding relationship processing method. FIG. 5 is another flowchart illustrating a session binding relationship processing method for establishing a session binding relationship, i.e., a process of a processing method for a BSF to establish a session binding relationship. As shown in FIG. 5, the process includes the following operations S41 to S43.

At operation S41, in response to receiving a management create request message sent by a PCF, information of a first user group and information of the PCF which are carried in the management create request message are acquired.

At this operation, a BSF receives the management create request message (Nbsf_Management_Create Request) sent by the PCF, and acquires the information of the first user group and the information of the PCF which are carried in the management create request message. The PCF sending the management create request message is a PCF which performs takeover when user group migration occurs, the information of the PCF is the information of the PCF performing takeover, and the first user group is a user group to be migrated, and includes at least two session users.

At operation S42, a first binding relationship between the information of the user group and the information of the PCF is established according to the information of the first user group and the information of the PCF.

At this operation, the BSF establishes, according to the information of the first user group and the information of the PCF sending the management create request message, the first binding relationship between the information of the user group and the information of the PCF (i.e., the PCF performing takeover).

At operation S43, a management create response message is sent to the PCF.

At this operation, after establishing the first binding relationship between the information of the user group and the information of the PCF, the BSF returns the management create response message (Nbsf_Management_Create Response) to the PCF.

According to the session binding relationship processing method provided by the present disclosure, in a case where the user group is migrated between PCFs, the information of the first user group to be migrated is sent to the BSF using the management create request message sent by the PCF performing takeover, and the BSF establishes the user-group-based session binding relationship (i.e., the binding relationship between the information of the first user group and the information of the PCF performing takeover), so that signaling interaction between the PCF and the BSF is greatly reduced, and an traffic impact of the migration of the user group between the PCFs on a signaling network is reduced, thereby shortening AF traffic call loss time.

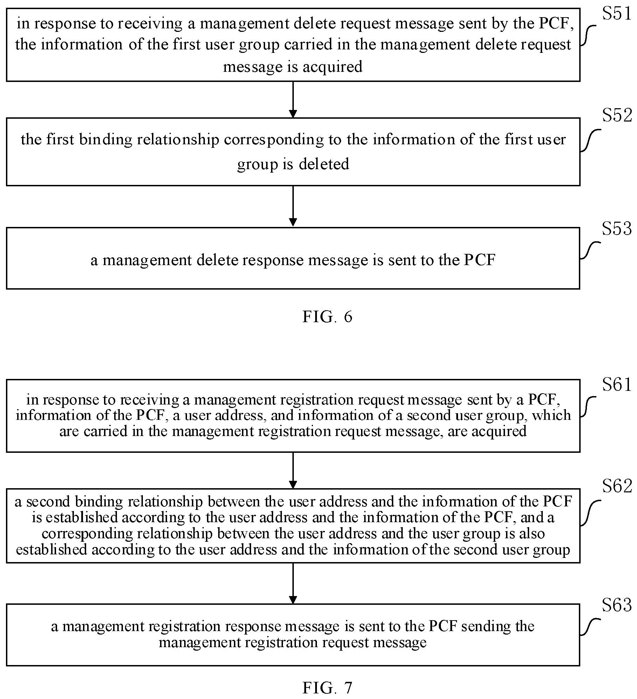

FIG. 6 is another flowchart of a session binding relationship processing method for deleting a session binding relationship, that is, a process of deleting the session binding relationship by the BSF. As shown in FIG. 6, after sending the management create response message to the PCF (i.e., the operation S43), the session binding relationship processing method may further include the following operations S51 to S53.

At operation S51, in response to receiving a management delete request message sent by the PCF, the information of the first user group carried in the management delete request message is acquired.

At this operation, the BSF receives the management delete request message (Nbsf_Management_Delete Request) sent by the PCF, and acquires the information of the first user group carried in the management delete request message. The PCF sending the management delete request message is the PCF performing takeover, and is also the PCF sending the management create request message. The PCF performing takeover sends the management delete request message to the BSF in a case where a third condition is met.

At operation S52, the first binding relationship corresponding to the information of the first user group is deleted.

At this operation, the BSF enables the first user group to be migrated as a whole from the PCF performing takeover to the original PCF by deleting the first binding relationship corresponding to the information of the first user group.

At operation S53, a management delete response message is sent to the PCF.

At this operation, after deleting the first binding relationship corresponding to the information of the first user group, the BSF returns the management delete response message (Nbsf_Management_Delete Response) to the PCF sending the management deletion request message.

FIG. 7 is another flowchart illustrating registration of a PCF with a BSF, that is, a process of establishing a second binding relationship and a corresponding relationship in a registration process by the BSF. As shown in FIG. 7, before receiving the management create request message sent by the PCF (i.e., the operation S41), the session binding relationship processing method may further include the following operations S61 to S63.

At operation S61, in response to receiving a management registration request message sent by a PCF, information of the PCF, a user address, and information of a second user group, which are carried in the management registration request message, are acquired.

The information of the PCF is information of the PCF sending the management registration request message.

In a session establishment procedure, after the PCF determines a user group corresponding to the user address, the PCF sends the management registration request message (Nbsf_Management _Register Request) to the BSF, and the management registration request message carries the information of the PCF, the user address, and the information of the second user group. At this operation, the BSF acquires the information of the PCF, the user address, and the information of the second user group from the management registration request message.

At operation S62, a second binding relationship between the user address and the information of the PCF is established according to the user address and the information of the PCF, and a corresponding relationship between the user address and the user group is also established according to the user address and the information of the second user group.

At this operation, the BSF not only establishes the user-based second binding relationship based, but also records a user group to which a user belongs (i.e., the corresponding relationship between the user address and the user group).

At operation S63, a management registration response message is sent to the PCF sending the management registration request message.

At this operation, the BSF returns the management registration response message (Nbsf_Management _Register Response) to the PCF sending the management registration request message.

In the present disclosure, the first binding relationship is used for PCF positioning of a user group which has been migrated in a session process, and the second binding relationship is used for PCF positioning of a user which has not been migrated in a session process.

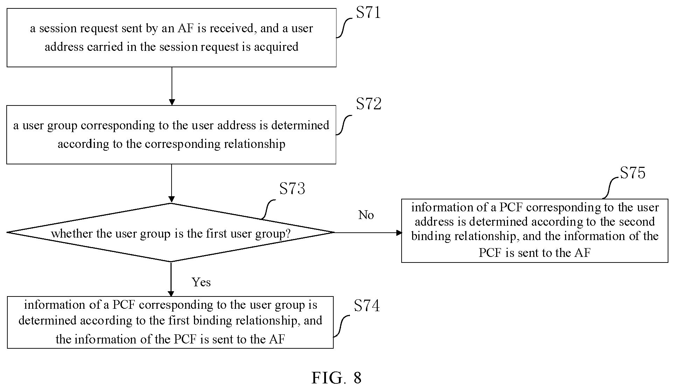

FIG. 8 is a schematic diagram of a session procedure according to the present disclosure, and the session procedure is described in detail below with reference to FIG. 8. As shown in FIG. 8, after sending the management create response message to the PCF (i.e., the operation S43), the method further includes the following operations S71 to S75.

At operation S71, a session request sent by an AF is received, and a user address carried in the session request is acquired.

In the session procedure, the AF initiates the session request to the BSF, and the session request carries the user address of a session user. At this operation, the BSF acquires the user address in the session request.

At operation S72, a user group corresponding to the user address is determined according to the corresponding relationship.

At this operation, the BSF searches the corresponding relationship between the user address and the user group according to the user address to obtain the corresponding user group.

At operation S73, if the obtained user group is the first user group, operation S74 is performed; and if the obtained user group is not the first user group, operation S75 is performed.

At this operation, if the BSF determines that the user group corresponding to the user address is the first user group, which indicates that the session user has been migrated, PCF positioning is carried out according to the first binding relationship; and if the BSF determines that the user group corresponding to the user address is not the first user group, which indicates that the session user is not migrated, PCF positioning is carried out according to the second binding relationship.

At operation S74, information of a PCF corresponding to the user group is determined according to the first binding relationship, and the information of the PCF is sent to the AF.

At this operation, the BSF searches the first binding relationship between the information of the user group and the information of the PCF according to the user group determined at the operation S72, obtains the information of the corresponding PCF, and returns the information of the PCF to the AF. The information of the PCF obtained at this operation is the information of the PCF which performs takeover in the case of the migration of the user group.

At operation S75, information of a PCF corresponding to the user address is determined according to the second binding relationship, and the information of the PCF is sent to the AF.

At this operation, the BSF searches the second binding relationship between the user address and the information of the PCF according to the user address obtained at the operation S71, obtains the information of the corresponding PCF, and returns the information of the PCF to the AF. The information of the PCF obtained at this operation is information of a PCF with no user group migration, or information of a PCF where a part of user groups have been migrated but the user group to which the user address belongs has not been migrated.

The information of the first user group may include an identification of the first user group. The information of the PCF may include one of or any combination of: an identification of the PCF, Fqdn of the PCF, DiamHost of the PCF, DiamRealm of the PCF.

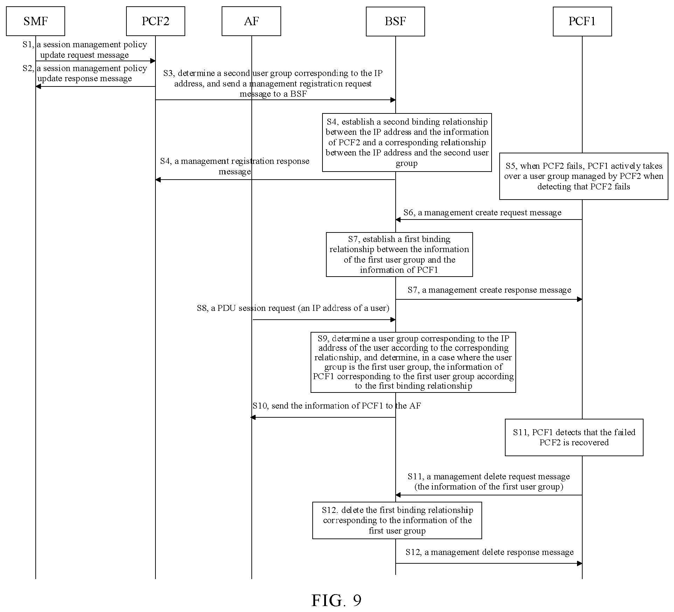

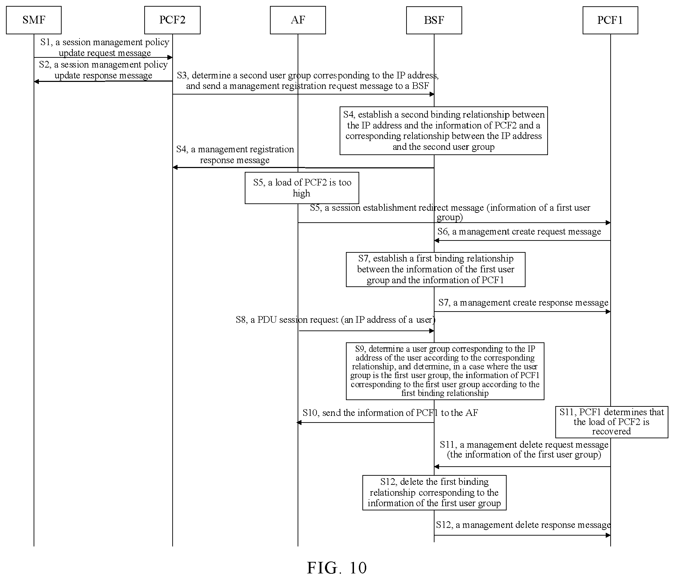

For clearly illustrating the solutions of the present disclosure, a session binding relationship processing process in a failure scenario of a PCF in a disaster-tolerant group and a session binding relationship processing process in a load balancing scenario of a PCF in a disaster-tolerant group are respectively illustrated below by specific examples with reference to FIG. 9 and FIG. 10. It should be noted that, in the specific examples of the present disclosure, one disaster-tolerant group includes two PCFs (PCF1 and PCF2), PCF2 is the PCF where the user group migration occurs, PCF1 is the PCF performing takeover and handles a PDU session binding relationship. However, the specific examples are merely for illustration, and the solutions of the present disclosure are not limited thereto. As shown in FIG. 9, in the failure scenario of the PCF in the disaster-tolerant group, a PDU session binding relationship processing process includes the following operations S1 to S12.

At operation S1, an SMF sends a session management policy update request message to PCF2.

In a PDU session establishment procedure, after the SMF allocates an IP address to a PDU session user, the SMF sends the session management policy update request message carrying the IP address to PCF2.

At operation S2, PCF2 generates an SM policy and then returns a session management policy update response message to the SMF.

At operation S3, PCF2 determines a second user group corresponding to the IP address, and sends a management registration request message to a BSF.

The management registration request message may carry information of the second user group, a user identification, the IP address, and information of PCF2 (including an identification of PCF2, Fqdn of PCF2, DiamHost of PCF2, and DiamRealm of PCF2).

At operation S4, the BSF establishes a second binding relationship between the IP address and the information of PCF2 and a corresponding relationship between the IP address and the second user group, and returns a management registration response message to the PCF2.

At operation S5, when PCF2 fails, PCF1 actively takes over a user group (i.e., a first user group) managed by PCF2 when detecting that PCF2 fails.

At operation S6, PCF1 sends a management create request message to the BSF.

The management create request message carries information of the first user group and information of PCF1 (including an identification of PCF1, Fqdn of PCF1, DiamHost of PCF1, and DiamRealm of PCF1).

At operation S7, the BSF establishes a first binding relationship between the information of the first user group and the information of PCF1, and returns a management create response message to PCF1.

At operation S8, an AF sends a PDU session request carrying an IP address of a user to the BSF.

At operation S9, the BSF determines a user group corresponding to the IP address of the user according to the corresponding relationship, and in a case where the user group is the first user group, the BSF determines the information of PCF1 corresponding to the first user group according to the first binding relationship.

At operation S10, the BSF sends the information of PCF1 to the AF.

At operation S11, after PCF1 detects that the failed PCF2 is recovered, PCF1 sends a management delete request message carrying the information of the first user group to the BSF.

At operation S12, the BCF deletes the first binding relationship corresponding to the information of the first user group, and returns a management delete response message to PCF1.

The process of registering the PCF with the BSF and the process of establishing/deleting the PDU session binding relationship in the failure scenario of the PCF in the disaster-tolerant group are the same as those in the load balancing scenario of the PCF in the disaster-tolerant group, and the two scenarios merely differ in triggering conditions of the process of establishing/deleting the PDU session binding relationship. As shown in FIG. 10, in the load balancing scenario of the PCF, a PDU session binding relationship processing process includes the following operations S1 to S12.

At operation S1, an SMF sends a session management policy update request message to PCF2.

In a PDU session establishment procedure, after the SMF allocates an IP address to a PDU session user, the SMF sends the session management policy update request message carrying the IP address to PCF2.

At operation S2, PCF2 generates an SM policy and then returns a session management policy update response message to the SMF.

At operation S3, PCF2 determines a second user group corresponding to the IP address, and sends a management registration request message to a BSF.

The management registration request message may carry information of the second user group, a user identification, the IP address, and information of PCF2 (including an identification of PCF2, Fqdn of PCF2, DiamHost of PCF2, and DiamRealm of PCF2).

At operation S4, the BSF establishes a second binding relationship between the IP address and the information of PCF2 and a corresponding relationship between the IP address and the second user group, and returns a management registration response message to the PCF2.

At operation S5, when a load of PCF2 is too high, PCF2 sends, after receiving a session establishment message sent by the SMF, a session establishment redirect message to PCF1, so as to allow PCF1 to take over at least a part of user groups (i.e., a first user group) managed by PCF2.

At operation S6, PCF1 sends a management create request message to the BSF.

The management create request message carries information of the first user group and information of PCF1 (including an identification of PCF1, Fqdn of PCF1, DiamHost of PCF1, and DiamRealm of PCF1).

At operation S7, the BSF establishes a first binding relationship between the information of the first user group and the information of PCF1, and returns a management create response message to PCF1.

At operation S8, an AF sends a PDU session request carrying an IP address of a user to the BSF.

At operation S9, the BSF determines a user group corresponding to the IP address of the user according to the corresponding relationship, and in a case where the user group is the first user group, the BSF determines the information of PCF1 corresponding to the first user group according to the first binding relationship.

At operation S10, the BSF sends the information of PCF1 to the AF.

At operation S11, after PCF1 determines that the load of PCF2 is recovered, PCF1 sends a management delete request message carrying the information of the first user group to the BSF.

At operation S12, the BCF deletes the first binding relationship corresponding to the information of the first user group, and returns a management delete response message to PCF1.

Through carrying the information of the second user group to which the IP address of the user belongs in the management registration request message sent by PCF2 to the BSF, the BSF establishes the second binding relationship between the IP address and the information of PCF2 and the corresponding relationship between the IP address and the second user group; and in the failure scenario of the PCF in the disaster-tolerant group and in the load balancing scenario of the PCF in the disaster-tolerant group, the PCF performing takeover uses the newly generated management create request message to allow the BSF to locally add the first binding relationship between the information of the first user group and the information of PCF1, and uses the newly generated management delete request message to allow the BSF to locally delete the first binding relationship, thus achieving establishment and deletion of the user-group-based session binding relationship.

The session binding relationship processing method provided by the present disclosure can increase interaction efficiency between the PCF and the BSF after the PCF fails, and reduce call loss caused by a fact that a correct PCF cannot be found for traffic of an AF. Signaling interaction between the PCF and the BSF after disaster-tolerant switching is performed on the PCF is reduced, so that a traffic impact on the BSF after the disaster tolerance of the PCF occurs can be greatly reduced. Assuming that the current PCF manages a million online users, if the PCF crashes and the switching is carried out, according to a conventional session binding relationship processing solution, the PCF performing takeover needs to send 2 million messages to the BSF to modify session binding relationships of all the users. However, according to the session binding relationship processing method provided by the present disclosure, the modification of the session binding relationships of all the users can be achieved by sending merely a few messages or at most hundreds of messages. The number of the messages is determined based on the number of user groups that are migrated, and is much smaller than the number of the online users.

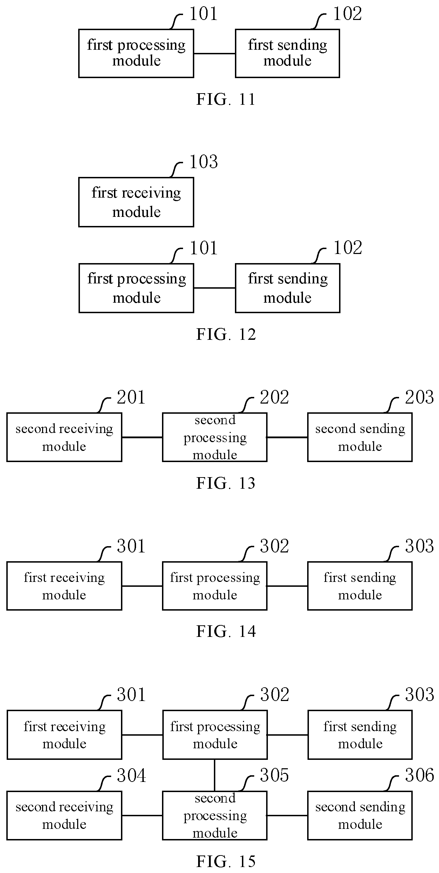

Based on the same technical concept, the present disclosure further provides a PCF. As shown in FIG. 11, a PCF includes a first processing module 101 and a first sending module 102.

The first processing module 101 is configured to determine a first user group in response to a case where a preset first condition for user group migration is met, with the first user group including at least two session users.

The first sending module 102 is configured to send a management create request message carrying information of the first user group and information of the current PCF to a BSF, so as to allow the BSF to establish a first binding relationship between the information of the user group and the information of the PCF according to the information of the first user group and the information of the current PCF.

The preset first condition may include: detection of a failure of another PCF in a disaster-tolerant group to which the current PCF belongs, or reception of a session establishment redirect message sent by another PCF in the disaster-tolerant group to which the current PCF belongs, and the session establishment redirect message is sent by the another PCF in a case where a load does not meet a preset second condition.

In a case where the preset first condition includes the detection of the failure of another PCF in the disaster-tolerant group to which the current PCF belongs, the first processing module 101 is configured to determine a user group managed by the failed PCF as the first user group; or in a case where the preset first condition includes the reception of the session establishment redirect message sent by another PCF in the disaster-tolerant group to which the current PCF belongs, the first processing module 101 is configured to determine at least a part of user groups managed by the PCF sending the session establishment redirect message as the first user group.

As shown in FIG. 12, the PCF may further include a first receiving module 103.

The first processing module 101 is further configured to determine whether a preset third condition for migrating a user group back is met.

The first sending module 102 is further configured to send, in response to a case where the preset third condition for migrating the user group back is met, a management delete request message carrying the information of the first user group to the BSF, so as to allow the BSF to delete the first binding relationship corresponding to the information of the first user group.

The first receiving module 103 is configured to receive a management delete response message returned by the BSF.

The preset third condition may include that it is detected that the failed PCF returns to normal or that it is determined that the load of the PCF sending the session establishment redirect message meets the preset second condition.

The information of the first user group may include an identification of the first user group. The information of the PCF may include one of or any combination of: an identification of the PCF, Fqdn of the PCF, DiamHost of the PCF, DiamRealm of the PCF.

The present disclosure further provides a PCF. As shown in FIG. 13, a PCF includes a second receiving module 201, a second processing module 202, and a second sending module 203.

The second receiving module 201 is configured to receive a session management policy update request message sent by an SMF.

The second processing module 202 is configured to acquire a user address carried in the session management policy update request message, and determine a second user group corresponding to the user address.

The second sending module 203 is configured to return a session management policy update response message to the SMF, and send a management registration request message carrying information of the current PCF, the user address, and information of the second user group to a BSF, so as to allow the BSF to establish a second binding relationship between the user address and the information of the PCF according to the user address and the information of the current PCF and establish a corresponding relationship between the user address and the user group according to the user address and the information of the second user group.

Based on the same technical concept, the present disclosure further provides a BSF. As shown in FIG. 14, a BSF includes a first receiving module 301, a first processing module 302, and a first sending module 303.

The first receiving module 301 is configured to receive a management create request message sent by a PCF.

The first processing module 302 is configured to acquire information of a first user group and information of the PCF which are carried in the management create request message, and establish a first binding relationship between the information of the user group and the information of the PCF according to the information of the first user group and the information of the PCF, with the first user group including at least two session users.

The first sending module 303 is configured to send a management create response message to the PCF.

The first receiving module 301 is further configured to receive a management delete request message sent by the PCF.

The first processing module 302 is further configured to acquire the information of the first user group carried in the management delete request message, and delete the first binding relationship corresponding to the information of the first user group.

The first sending module 303 is further configured to send a management delete response message to the PCF.

The first receiving module 301 is further configured to receive a management registration request message sent by a PCF.

The first processing module 302 is further configured to acquire information of the PCF, a user address, and information of a second user group which are carried in the management registration request message, with the information of the PCF is information of the PCF sending the management registration request message, to establish a second binding relationship between the user address and the information of the PCF according to the user address and the information of the PCF, and to establish a corresponding relationship between the user address and the user group according to the user address and the information of the second user group.

The first sending module 303 is further configured to send a management registration response message to the PCF sending the management registration request message.

As shown in FIG. 15, the BSF may further include a second receiving module 304, a second processing module 305, and a second sending module 306.

The second receiving module 304 is configured to receive a session request sent by an AF.

The second processing module 305 is configured to acquire a user address carried in the session request, and determine a user group corresponding to the user address according to the corresponding relationship. The second processing module 305 is further configured to determine, in response to a case where the user group is the first user group, information of a PCF corresponding to the user group according to the first binding relationship.

The second sending module 306 is configured to send the information of the PCF to the AF.

The second processing module 305 is further configured to determine, in response to a case where the user group is not the first user group, information of a PCF corresponding to the user address according to the second binding relationship.

The second sending module 306 is configured to send the information of the PCF to the AF.

The information of the first user group may include an identification of the first user group. The information of the PCF may include one of or any combination of: an identification of the PCF, Fqdn of the PCF, DiamHost of the PCF, DiamRealm of the PCF.

The present disclosure further provides an electronic device, including: one or more processors and a storage device. The storage device has stored thereon one or more programs which, when executed by the one or more processors, cause the one or more processors to implement the session binding relationship processing method according to the embodiments of the present disclosure.

The present disclosure further provides a computer-readable medium having a computer program stored thereon. When the computer program is executed by a processor, the processor is caused to implement the session binding relationship processing method according to the embodiments of the present disclosure.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiment using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiment. Therefore, it should be understood by those of ordinary skill in the art that various changes in the forms and the details can be made without departing from the scope of the present disclosure of the appended claims.

## Claims

1. A session binding relationship processing method applicable to a Policy Control Function entity, called PCF, comprising:
in response to a case where a preset first condition for user group migration is met, determining (S11) a first user group, wherein the first user group comprises at least two session users; and
sending (S12) a management create request message carrying information of the first user group and information of a current PCF to a Binding Support Function entity, called BSF, so as to allow the BSF to establish a first binding relationship between the information of the user group and the information of the PCF according to the information of the first user group and the information of the current PCF.

2. The method of claim 1, wherein the preset first condition comprises:
detection of a failure of another PCF in a disaster-tolerant group to which the current PCF belongs; or
reception of a session establishment redirect message sent by another PCF in the disaster-tolerant group to which the current PCF belongs, wherein the session establishment redirect message is sent by the another PCF in a case where a load does not meet a preset second condition.

3. The method of claim 2, wherein in a case where the preset first condition comprises the detection of the failure of another PCF in the disaster-tolerant group to which the current PCF belongs, determining the first user group comprises: determining a user group managed by the failed PCF as the first user group, or
in a case where the preset first condition comprises the reception of the session establishment redirect message sent by another PCF in the disaster-tolerant group to which the current PCF belongs, determining the first user group comprises: determining at least a part of user groups managed by the PCF sending the session establishment redirect message as the first user group.

4. The method of claim 2, wherein after sending (S12) the management create request message carrying the information of the first user group and the information of the current PCF to the BSF, the method further comprises:
in response to a case where a preset third condition for migrating a user group back is met, sending (S21) a management delete request message carrying the information of the first user group to the BSF, so as to allow the BSF to delete the first binding relationship corresponding to the information of the first user group; and
receiving (S22) a management delete response message returned by the BSF.

5. The method of claim 4, wherein the preset third condition comprises:
it is detected that the failed PCF returns to normal; or
it is determined that the load of the PCF sending the session establishment redirect message meets the preset second condition.

6. The method of any one of claims 1 to 5, wherein the information of the first user group comprises an identification of the first user group; and/or
the information of the PCF comprises one of or any combination of: an identification of the PCF, a Fully Qualified Domain Name of the PCF, a Diameter protocol host name of the PCF, and a Diameter protocol realm name of the PCF.

7. A session binding relationship processing method applicable to a Binding Support Function entity, called BSF, comprising:
in response to receiving a management create request message sent by a first Policy Control Function entity, called PCF, acquiring (S41) information of a first user group and information of the PCF which are carried in the management create request message, wherein the first user group comprises at least two session users;
establishing (S42) a first binding relationship between the information of the user group and the information of the PCF according to the information of the first user group and the information of the PCF; and
sending (S43) a management create response message to the first PCF.

8. The method of claim 7, wherein after sending (S43) the management create response message to the first PCF, the method further comprises:
in response to receiving a management delete request message sent by the first PCF, acquiring (S51) the information of the first user group carried in the management delete request message;
deleting (S52) the first binding relationship corresponding to the information of the first user group; and
sending (S53) a management delete response message to the first PCF.

9. The method of claim 7, further comprising:
in response to receiving a management registration request message sent by a second PCF, acquiring (S61) information of the PCF, a user address, and information of a second user group which are carried in the management registration request message, wherein the information of the PCF is information of the second PCF sending the management registration request message;
establishing (S62) a second binding relationship between the user address and the information of the PCF according to the user address and the information of the second PCF, and establishing a corresponding relationship between the user address and the user group according to the user address and the information of the second user group; and
sending (S63) a management registration response message to the second PCF sending the management registration request message.

10. The method of claim 9, wherein after sending (S43) the management create response message to the first PCF, the method further comprises:
receiving (S71) a session request sent by an Application Function entity, called AF, acquiring a user address carried in the session request, and determining (S72) a user group corresponding to the user address according to the corresponding relationship between the user address and the user group;
in response to the user group being the first user group, determining (S74) information of a PCF corresponding to the user group according to the first binding relationship; and
sending (S74) the information of the PCF to the AF.

11. The method of claim 10, further comprising:
in response to the user group not being the first user group, determining (S75) information of a PCF corresponding to the user address according to the second binding relationship; and
sending (S75) the information of the PCF to the AF.

12. The method of any one of claims 7 to 11, wherein the information of the first user group comprises an identification of the first user group; and/or
the information of the PCF comprises one of or any combination of: an identification of the PCF, a Fully Qualified Domain Name of the PCF, a Diameter protocol host name of the PCF, and a Diameter protocol realm name of the PCF.

13. An electronic device, comprising:
one or more processors; and
a storage device having one or more programs stored thereon;
when the one or more programs are executed by the one or more processors, the one or more processors are caused to implement the session binding relationship processing method of any one of claims 1 to 12.

14. A computer-readable medium having a computer program stored thereon, wherein when the program is executed by a processor, the processor is caused to implement the session binding relationship processing method of any one of claims 1 to 12.

## Patentansprüche

1. Verfahren zur Verarbeitung von Sitzungsbindungsbeziehungen, das auf eine "Policy Control Function"-Entität, PCF genannt, anwendbar ist, umfassend:
in Reaktion auf einen Fall, in dem eine vorgegebene erste Bedingung für Benutzergruppenmigration erfüllt ist, Bestimmen (S11) einer ersten Benutzergruppe, wobei die erste Benutzergruppe mindestens zwei Sitzungsbenutzer umfasst; und
Senden (S12) einer "Management Create"-Anforderungsnachricht, die Informationen der ersten Benutzergruppe und Informationen einer aktuellen PCF transportiert, an eine "Binding Support Function"-Entität, BSF genannt, um so der BSF zu ermöglichen, eine erste Bindungsbeziehung zwischen den Informationen der Benutzergruppe und den Informationen der PCF gemäß den Informationen der ersten Benutzergruppe und den Informationen der aktuellen PCF herzustellen.

2. Verfahren nach Anspruch 1, wobei die vorgegebene erste Bedingung umfasst:
Erkennung eines Ausfalls einer anderen PCF in einer katastrophentoleranten Gruppe, zu der die aktuelle PCF gehört; oder
Empfang einer Sitzungsaufbau-Umleitungsnachricht, die von einer anderen PCF in der katastrophentoleranten Gruppe, zu der die aktuelle PCF gehört, gesendet wurde, wobei die Sitzungsaufbau-Umleitungsnachricht von der anderen PCF in einem Fall gesendet wird, in dem eine Last eine vorgegebene zweite Bedingung nicht erfüllt.

3. Verfahren nach Anspruch 2, wobei in einem Fall, in dem die vorgegebene erste Bedingung die Erkennung des Ausfalls einer anderen PCF in der katastrophentoleranten Gruppe, zu der die aktuelle PCF gehört, umfasst, das Bestimmen der ersten Benutzergruppe umfasst: Bestimmen einer Benutzergruppe, die von der ausgefallenen PCF verwaltet wird, als die erste Benutzergruppe, oder
in einem Fall, in dem die vorgegebene erste Bedingung den Empfang der Sitzungsaufbau-Umleitungsnachricht umfasst, die von einer anderen PCF in der katastrophentoleranten Gruppe, zu der die aktuelle PCF gehört, gesendet wurde, das Bestimmen der ersten Benutzergruppe umfasst: Bestimmen wenigstens eines Teils von Benutzergruppen, die von der die Sitzungsaufbau-Umleitungsnachricht sendenden PCF verwaltet werden, als die erste Benutzergruppe.

4. Verfahren nach Anspruch 2, wobei nach dem Senden (S12) der "Management Create"-Anforderungsnachricht, welche die Informationen der ersten Benutzergruppe und die Informationen der aktuellen PCF transportiert, an die BSF das Verfahren ferner umfasst:
in Reaktion auf einen Fall, in dem eine vorgegebene dritte Bedingung für das Zurückmigrieren einer Benutzergruppe erfüllt ist, Senden (S21) einer "Management Delete"-Anforderungsnachricht, welche die Informationen der ersten Benutzergruppe transportiert, an die BSF, um so der BSF zu ermöglichen, die erste Bindungsbeziehung, die den Informationen der ersten Benutzergruppe entspricht, zu löschen; und
Empfangen (S22) einer "Management Delete"-Antwortnachricht, die von der BSF zurückgesendet wurde.

5. Verfahren nach Anspruch 4, wobei die vorgegebene dritte Bedingung umfasst:
Es wird erkannt, dass die ausgefallene PCF zum Normalzustand zurückkehrt; oder
es wird bestimmt, dass die Last der PCF, welche die Sitzungsaufbau-Umleitungsnachricht sendet, die vorgegebene zweite Bedingung erfüllt.

6. Verfahren nach einem der Ansprüche 1 bis 5, wobei die Informationen der ersten Benutzergruppe eine Identifikation der ersten Benutzergruppe umfassen; und/oder
die Informationen der PCF eines oder eine beliebige Kombination von Folgendem umfassen: eine Identifikation der PCF, einen vollqualifizierten Domänennamen der PCF, einen Diameter-Protokoll-Hostnamen der PCF und einen Diameter-Protokoll-Realm-Namen der PCF.

7. Verfahren zur Verarbeitung von Sitzungsbindungsbeziehungen, das auf eine "Binding Support Function"-Entität, BSF genannt, anwendbar ist, umfassend:
in Reaktion auf das Empfangen einer "Management Create"-Anforderungsnachricht, die von einer "Policy Control Function"-Entität, PCF genannt, gesendet wurde, Erfassen (S41) von Informationen einer ersten Benutzergruppe und Informationen der PCF, welche in der "Management Create"-Anforderungsnachricht transportiert werden, wobei die erste Benutzergruppe mindestens zwei Sitzungsbenutzer umfasst;
Herstellen (S42) einer ersten Bindungsbeziehung zwischen den Informationen der Benutzergruppe und den Informationen der PCF gemäß den Informationen der ersten Benutzergruppe und den Informationen der PCF; und
Senden (S43) einer "Management Create"-Antwortnachricht an die erste PCF.

8. Verfahren nach Anspruch 7, wobei nach dem Senden (S43) der "Management Create"-Antwortnachricht an die erste PCF das Verfahren ferner umfasst:
in Reaktion auf das Empfangen einer "Management Delete"-Anforderungsnachricht, die von der ersten PCF gesendet wurde, Erfassen (S51) der Informationen der ersten Benutzergruppe, die in der "Management Delete"-Anforderungsnachricht transportiert werden;
Löschen (S52) der ersten Bindungsbeziehung, die den Informationen der ersten Benutzergruppe entspricht; und Senden (S53) einer "Management Delete"-Antwortnachricht an die erste PCF.

9. Verfahren nach Anspruch 7, ferner umfassend:
in Reaktion auf das Empfangen einer "Management Registration"-Anforderungsnachricht, die von einer zweiten PCF gesendet wurde, Erfassen (S61) von Informationen der PCF, einer Benutzeradresse und von Informationen einer zweiten Benutzergruppe, die in der "Management Registration"-Anforderungsnachricht transportiert werden, wobei die Informationen der PCF Informationen der zweiten PCF sind, welche die "Management Registration"-Anforderungsnachricht sendet;
Herstellen (S62) einer zweiten Bindungsbeziehung zwischen der Benutzeradresse und den Informationen der PCF gemäß der Benutzeradresse und den Informationen der zweiten PCF und Herstellen einer entsprechenden Beziehung zwischen der Benutzeradresse und der Benutzergruppe gemäß der Benutzeradresse und den Informationen der zweiten Benutzergruppe; und
Senden (S63) einer "Management Registration"-Antwortnachricht an die zweite PCF, welche die "Management Registration"-Anforderungsnachricht sendet.

10. Verfahren nach Anspruch 9, wobei nach dem Senden (S43) der "Management Create"-Antwortnachricht an die erste PCF das Verfahren ferner umfasst:
Empfangen (S71) eine Sitzungsanforderung, die von einer Anwendungsfunktions-Entität, AF genannt, gesendet wurde, Erfassen einer Benutzeradresse, die in der Sitzungsanforderung transportiert wird, und Bestimmen (S72) einer der Benutzeradresse entsprechenden Benutzergruppe gemäß der entsprechenden Beziehung zwischen der Benutzeradresse und der Benutzergruppe;
in Reaktion darauf, dass die Benutzergruppe die erste Benutzergruppe ist, Bestimmen (S74) von Informationen einer PCF, die der Benutzergruppe entspricht, gemäß der ersten Bindungsbeziehung; und
Senden (S74) der Informationen der PCF an die AF.

11. Verfahren nach Anspruch 10, ferner umfassend:
in Reaktion darauf, dass die Benutzergruppe nicht die erste Benutzergruppe ist, Bestimmen (S75) von Informationen einer PCF, die der Benutzeradresse entspricht, gemäß der zweiten Bindungsbeziehung; und
Senden (S75) der Informationen der PCF an die AF.

12. Verfahren nach einem der Ansprüche 7 bis 11, wobei die Informationen der ersten Benutzergruppe eine Identifikation der ersten Benutzergruppe umfassen; und/oder
die Informationen der PCF eines oder eine beliebige Kombination von Folgendem umfassen: eine Identifikation der PCF, einen vollqualifizierten Domänennamen der PCF, einen Diameter-Protokoll-Hostnamen der PCF und einen Diameter-Protokoll-Realm-Namen der PCF.

13. Elektronische Vorrichtung, umfassend:
einen oder mehrere Prozessoren; und
eine Speichervorrichtung mit einem oder mehreren darauf gespeicherten Programmen;
wobei, wenn das eine oder die mehreren Programme von dem einen oder den mehreren Prozessoren ausgeführt werden, der eine oder die mehreren Prozessoren veranlasst werden, das Verfahren zur Verarbeitung von Sitzungsbindungsbeziehungen nach einem der Ansprüche 1 bis 12 zu implementieren.

14. Computerlesbares Medium mit einem darauf gespeicherten Computerprogramm, wobei, wenn das Programm von einem Prozessor ausgeführt wird, der Prozessor veranlasst wird, das Verfahren zur Verarbeitung von Sitzungsbindungsbeziehungen nach einem der Ansprüche 1 bis 12 zu implementieren.

## Revendications

1. Procédé de traitement de relation de liaison de session applicable à une entité de fonction de contrôle de politique, Policy Control Function, appelée PCF, comprenant :
en réponse à un cas où une première condition prédéfinie pour migration de groupe d'utilisateurs est respectée, la détermination (S11) d'un premier groupe d'utilisateurs, dans lequel le premier groupe d'utilisateurs comprend au moins deux utilisateurs de session ; et
l'envoi (S12) d'un message de demande de création de gestion transportant des informations du premier groupe d'utilisateurs et des informations d'une PCF actuelles à une entité de fonction de support de liaison, Binding Support Function, appelée BSF, afin de permettre à la BSF d'établir une première relation de liaison entre les informations du groupe d'utilisateurs et les informations de la PCF selon les informations du premier groupe d'utilisateurs et les informations de la PCF actuelle.

2. Procédé de la revendication 1, dans lequel la première condition prédéfinie comprend :
la détection d'une défaillance d'une autre PCF dans un groupe à tolérance de sinistres auquel appartient la PCF actuelle ; ou
la réception d'un message de redirection d'établissement de session envoyé par une autre PCF dans le groupe à tolérance de sinistres auquel appartient la PCF actuelle, dans lequel le message de redirection d'établissement de session est envoyé par l'autre PCF dans un cas où une charge ne respecte pas une deuxième condition prédéfinie.

3. Procédé de la revendication 2, dans lequel, dans un cas où la première condition prédéfinie comprend la détection de la défaillance d'une autre PCF dans le groupe à tolérance de sinistres auquel appartient la PCF actuelle, la détermination du premier groupe d'utilisateurs comprend : la détermination d'un groupe d'utilisateurs géré par la PCF défaillante en tant que premier groupe d'utilisateurs, ou
dans un cas où la première condition prédéfinie comprend la réception du message de redirection d'établissement de session envoyé par une autre PCF dans le groupe à tolérance de sinistres auquel appartient la PCF actuelle, la détermination du premier groupe d'utilisateurs comprend : la détermination d'au moins une partie de groupes d'utilisateurs gérés par la PCF envoyant le message de redirection d'établissement de session en tant que premier groupe d'utilisateurs.

4. Procédé de la revendication 2, dans lequel après l'envoi (S12) du message de demande de création de gestion transportant les informations du premier groupe d'utilisateurs et les informations de la PCF actuelle à la BSF, le procédé comprend en outre :
en réponse à un cas où une troisième condition prédéfinie pour remigration d'un groupe d'utilisateurs est respectée, l'envoi (S21) d'un message de demande de suppression de gestion transportant les informations du premier groupe d'utilisateurs à la BSF, afin de permettre à la BSF de supprimer la première relation de liaison correspondant aux informations du premier groupe d'utilisateurs ; et
la réception (S22) d'un message de réponse de suppression de gestion envoyé par la BSF.

5. Procédé de la revendication 4, dans lequel la troisième condition prédéfinie comprend :
il est détecté que la PCF défaillante retourne à la normale ; ou
il est déterminé que la charge de la PCF envoyant le message de redirection d'établissement de session respecte la deuxième condition prédéfinie.

6. Procédé de l'une quelconque des revendications 1 à 5, dans lequel les informations du premier groupe d'utilisateurs comprennent une identification du premier groupe d'utilisateurs ; et/ou
les informations de la PCF comprennent un élément, ou une quelconque combinaison d'éléments, parmi : une identification de la PCF, un nom de domaine entièrement qualifié de la PCF, un nom d'hôte de protocole Diameter de la PCF, et un nom d'espace de protocole Diameter de la PCF.

7. Procédé de traitement de relation de liaison de session applicable à une entité de fonction de support de liaison, Binding Support Function, appelée BSF, comprenant :
en réponse à la réception d'un message de demande de création de gestion envoyé par un premier entité de fonction de contrôle de politique, Policy Control Function, appelée PCF, l'acquisition (S41) d'informations d'un premier groupe d'utilisateurs et d'informations de la PCF qui sont transportées dans le message de demande de création de gestion, dans lequel le premier groupe d'utilisateurs comprend au moins deux utilisateurs de session ;
l'établissement (S42) d'une première relation de liaison entre les informations du groupe d'utilisateurs et les informations de la PCF selon les informations du premier groupe d'utilisateurs et les informations de la PCF ; et
l'envoi (S43) d'un message de réponse de création de gestion à la première PCF.

8. Procédé de la revendication 7, dans lequel après l'envoi (S43) du message de réponse de création de gestion à la première PCF, le procédé comprend en outre :
en réponse à la réception d'un message de demande de suppression de gestion envoyé par la première PCF, l'acquisition (S51) des informations du premier groupe d'utilisateurs transportées dans le message de demande de suppression de gestion ;
la suppression (S52) de la première relation de liaison correspondant aux informations du premier groupe d'utilisateurs ; et
l'envoi (S53) d'un message de réponse de suppression de gestion à la première PCF.

9. Procédé de la revendication 7, comprenant en outre :
en réponse à la réception d'un message de demande d'enregistrement de gestion envoyé par une seconde PCF, l'acquisition (S61) d'informations de la PCF, d'une adresse d'utilisateur, et d'informations d'un second groupe d'utilisateurs qui sont transportées dans le message de demande d'enregistrement de gestion, dans lequel les informations de la PCF sont des informations de la seconde PCF envoyant le message de demande d'enregistrement de gestion ;
l'établissement (S62) d'une seconde relation de liaison entre l'adresse d'utilisateur et les informations de la PCF selon l'adresse d'utilisateur et les informations de la seconde PCF, et l'établissement d'une relation correspondante entre l'adresse d'utilisateur et le groupe d'utilisateurs selon l'adresse d'utilisateur et les informations du second groupe d'utilisateurs ; et
l'envoi (S63) d'un message de réponse d'enregistrement de gestion à la seconde PCF envoyant le message de demande d'enregistrement de gestion.

10. Procédé de la revendication 9, dans lequel après l'envoi (S43) du message de réponse de création de gestion à la première PCF, le procédé comprend en outre :
la réception (S71) d'une demande de session envoyée par une entité de fonction d'application, Application Function, appelée AF, l'acquisition d'une adresse d'utilisateur transportée dans la demande de session, et la détermination (S72) d'un groupe d'utilisateurs correspondant à l'adresse d'utilisateur selon la relation correspondante entre l'adresse d'utilisateur et le groupe d'utilisateurs ;
en réponse au fait que le groupe d'utilisateurs est le premier groupe d'utilisateurs, la détermination (S74) d'informations d'une PCF correspondant au groupe d'utilisateurs selon la première relation de liaison ; et
l'envoi (S74) des informations de la PCF à l'AF.

11. Procédé de la revendication 10, comprenant en outre :
en réponse au fait que le groupe d'utilisateurs n'est pas le premier groupe d'utilisateurs, la détermination (S75) d'informations d'une PCF correspondant à l'adresse d'utilisateur selon la seconde relation de liaison ; et
l'envoi (S75) des informations de la PCF à l'AF.

12. Procédé de l'une quelconque des revendications 7 à 11, dans lequel les informations du premier groupe d'utilisateurs comprennent une identification du premier groupe d'utilisateurs ; et/ou
les informations de la PCF comprennent un élément, ou une quelconque combinaison d'éléments, parmi : une identification de la PCF, un nom de domaine entièrement qualifié de la PCF, un nom d'hôte de protocole Diameter de la PCF, et un nom d'espace de protocole Diameter de la PCF.

13. Dispositif électronique, comprenant :
un ou plusieurs processeurs ; et
un dispositif de stockage ayant un ou plusieurs programmes stockés sur celui-ci ;
lorsque l'un ou les plusieurs programmes sont exécutés par l'un ou les plusieurs processeurs, l'un ou les plusieurs processeurs sont amenés à mettre en œuvre le procédé de traitement de relation de liaison de session de l'une quelconque des revendications 1 à 12.

14. Support lisible par ordinateur ayant un programme d'ordinateur stocké sur celui-ci, dans lequel, lorsque le programme est exécuté par un processeur, le processeur est amené à mettre en œuvre le procédé de traitement de relation de liaison de session de l'une quelconque des revendications 1 à 12.
